# EUROPÄISCHE PATENTSCHRIFT

(11) **EP 3 169 909 B1**
(45) Veröffentlichungstag und Bekanntmachung des Hinweises auf die Patenterteilung: **18.05.2022**
(21) Anmeldenummer: 15756811.4
(22) Anmeldetag: 15.07.2015
(51) Int. Cl.: F16D 13/64, F16D 69/00

(54) **REIBLAMELLE**
FRICTION PLATE
LAMELLE À FRICTION

(30) Priorität: 17.07.2014 AT 504962014
(43) Veröffentlichungstag der Anmeldung: 24.05.2017
(73) Patentinhaber: Miba Frictec GmbH, 4663 Laakirchen (AT)
(72) Erfinder: FEJES, Martin, 94144 Vlkas (SK); FÖGE, Volker, A-4820 Bad Ischl (AT); NICKEL, Falk, A-4810 Gmunden (AT)
(74) Vertreter: Burger, Hannes
(86) Internationale Anmeldenummer: PCT/AT2015/050168
(87) Internationale Veröffentlichungsnummer: WO 2016/007980

(56) Entgegenhaltungen:
- EP-A1- 0 848 179
- EP-A1- 1 650 454
- WO-A1-96/18049
- DE-A1-102008 034 206
- DE-A1-102009 000 431
- DE-B- 1 216 624
- US-B1- 6 360 864

## Beschreibung

Die Erfindung betrifft eine Reiblamelle für eine Reibvorrichtung, mit einem Lamellenkörper, auf dem gegebenenfalls ein Reibbelag angeordnet ist.

Reiblamellen werden in Reibvorrichtungen, wie z.B. Kupplungen, bekanntlich zur Übertragung von Drehmomenten eingesetzt. Die Reiblamellen bestehen üblicherweise aus einem Ring, der entweder als solches verbaut wird oder Träger eines Reibbelages ist. So genannte Gegenlamellen, die mit Reiblamellen mit Reibbelag in Reibschluss gebracht werden, bestehen in der Regel aus einem Metallring, wie insbesondere Stahl oder Aluminium.

Diese Gegenlamellen wurden in der Vergangenheit großteils einstückig hergestellt. Dazu wurde aus einem Metallblech die entsprechende Form ausgestanzt. Dabei fällt allerdings eine große Menge an Verschnitt an. Um diesen Nachteil zum umgehen, sind im Stand der Technik, beispielsweise der DE 10 2011 100 864 A1, bereits mehrteilige, segmentierte Reiblamellen beschrieben worden. Die Reiblamellen werden dabei aus mehreren Reiblamellensegmenten aufgebaut, die formschlüssig miteinander verbunden und verstemmt werden. Es kann damit zwar der Verschnitt an Metall reduziert werden, auf die Eigenschaften der Reiblamelle an sich kann damit aber nur bedingt bzw. nicht Einfluss genommen werden.

Weitere Beispiele segmentierter Reiblamellen werden in den Veröffentlichungen DE 10 2009 000431 A1, US 6 360 864 B1, DE 12 16 624 B, EP 0 848 179 A1 und WO 96/18049 A1 gezeigt.

Die Aufgabe der vorliegenden Erfindung besteht darin, eine anpassbare Lamelle für eine Reibvorrichtung zu schaffen.

Diese Aufgabe der Erfindung wird durch eine Reiblamelle nach Anspruch 1 gelöst.

Von Vorteil ist dabei, dass die Reiblamelle sowohl hinsichtlich der mechanischen Eigenschaften als auch hinsichtlich der Herstellbarkeit dieser mechanischen Eigenschaften verbessert werden kann. Es ist damit möglich auf einfache Weise die Vorteile von verschiedenen Werkstoffen in einer Reiblamelle zu kombinieren. Beispielsweise kann damit die Durchbiegbarkeit der Reiblamelle verringert werden, sodass diese der Anforderungen an die Ebenheit besser genügt, um damit ein gleichmäßigeres Einrücken zur Ausbildung eines Reibschlusses mit einer weiteren Reiblamelle der Reibvorrichtung zu ermöglichen. Es ist auch möglich, die axiale Dämpfung beim Einrücken einzustellen. Wie nachstehend noch ausgeführt wird, können die Reiblamellenringe wie im Stand der Technik beschrieben, ebenfalls aus Reiblamellensegmenten aufgebaut sein. Hier hat die Mehrschichtigkeit in axialer Richtung den Vorteil, dass die Stoßfugen in Umfangsrichtung versetzt verlaufen können, dass also in axialer Richtung keine durchgehende Stoßfuge ausgebildet wird. Es kann damit die Verbindung der einzelnen Reiblamellensegmente verbessert werden. Darüber hinaus hat sich dabei auch als Vorteil erwiesen, dass die einzelnen Reiblamellensegmente mit einer geringeren Kraft verstemmt werden können. Damit können wiederum die Gratbildung beim Verstemmen und das Ausbeulen der Reiblamelle beim Verstemmen reduziert werden, sodass die Oberfläche der Reiblamelle, die in Reibschluss mit der weiteren Reiblamelle der Reibvorrichtung tritt, glatter ist. Gemäß einer Ausführungsvariante kann vorgesehen sein, dass zumindest zwei der miteinander verbundenen Reiblamellenringe aus einem unterschiedlichen Werkstoff bestehen. Es kann damit die Anpassung der Eigenschaften der Reiblamelle in einem größeren Umfang erfolgen. Nach einer bevorzugten Ausführungsvariante dazu kann vorgesehen sein, dass ein Reiblamellenring aus einem Stahl gebildet ist und ein weiterer Reiblamellenring ebenfalls aus einem Stahl gebildet ist, wobei die Stähle unterschiedliche Eigenschaften aufweisen, insbesondere eine unterschiedliche Härte. Es ist damit einerseits eine Kostenreduktion möglich, indem teurere Stahlsorten nur für jene(n) Reiblamellenring(e) verwendet werden, wo er oder sie aufgrund der erforderlichen mechanischen Eigenschaften der Reiblamelle gewünscht sind. Andererseits kann damit aber auch bewusst das Dämpfungsverhalten der Reiblamelle beeinflusst werden, indem hart/weich Kombination an unterschiedlichen Stählen eingesetzt werden.

Erfindungsgemäß ist vorgesehen, dass der Lamellenkörper in axialer Richtung zumindest einen ersten Reiblamellenring, zumindest einen zweiten Reiblamellenring und zumindest einen dritten Reiblamellenring aufweist, wobei der zweite Reiblamellenring in axialer Richtung zwischen dem ersten und dem dritten Reiblamellenring angeordnet ist.

Nach einer Ausführungsvariante der Reiblamelle kann vorgesehen sein, dass der zweite Reiblamellenring unterschiedlich ist zu dem ersten und dem zweiten Reiblamellenring. Es besteht also im Rahmen der Erfindung die Möglichkeit, einerseits unterschiedliche Werkstoffe und andererseits zwar gleiche Werkstoffe aber mit unterschiedlichen mechanischen Eigenschaften für die Reiblamelle einzusetzen. Vorzugsweise ist dabei der zumindest eine zweite Reiblamellenring zwischen dem zumindest einen ersten und dem zumindest einen zweiten Reiblamellenring angeordnet, um damit beidseitig der Reiblamelle (in axialer Richtung) zumindest annähernd ähnliche oder gleiche Eigenschaften zu Verfügung zu stellen.

Es kann mit dieser Ausführungsvariante also ein sehr breites Spektrum an Anpassungen der mechanischen Eigenschaften der Reiblamelle zur Verfügung gestellt werden. Daneben bzw. als Zusatzeffekt ist es damit aber auch möglich das Verfahren zur Herstellung der Reiblamelle positiv zu beeinflussen, indem es beispielsweise nicht erforderlich ist, dass der zumindest eine zweite Reiblamellenring die gleich aufwändige Härtung durchläuft wie der zumindest eine erste und der zumindest eine zweite Reiblamellenring, die mit den weiteren, in axialer Richtung der Reibvorrichtung unmittelbar anschließenden Reiblamellen der Reibvorrichtung während der Ausbildung des Reibschlusses in Wirkverbindung stehen.

Es kann dabei vorgesehen sein, dass der zweite Reiblamellenring eine zu dem ersten und dem zweiten Reiblamellenring unterschiedliche Schichtdicke und/oder Härte aufweist, wodurch das Gesamtverhalten der Reiblamelle insgesamt besser beeinflusst werden kann.

Gemäß einer besonderen Ausführungsvariante dazu können der erste und dritte Reiblamellenring dünner und härter ausgebildet sein als der zweite Reiblamellenring. Neben der Anpassung der mechanischen Eigenschaften der Reiblamelle durch die Kombination eines zäheren Innenrings mit härteren Außenringen kann damit ein entsprechender Kostenvorteil erreicht werden, da es möglich ist, für den zumindest einen zweiten Reiblamellenring auf kostengünstiger Stahlsorten bzw. generell kostengünstigere metallische Werkstoffe zurückzugreifen.

Nach einer weiteren Ausführungsvariante der Reiblamelle kann vorgesehen sein, dass zumindest einer der Reiblamellenringe aus mehreren Reiblamellensegmenten zusammengesetzt ist, die in einer Umfangsrichtung der Lamellenkörpers hintereinander angeordnet sind, wobei gegebenenfalls zumindest einzelne der mehreren Reiblamellensegmente miteinander verbunden sind. Wie bei der Reiblamelle, die aus der voranstehend zitierten DE 10 2011 100 864 A1 bekannt ist, kann damit ebenfalls ein entsprechender Kostenvorteil durch Reduktion des Verschnitts während der Herstellung des Reiblamellenringes realisiert werden. Zudem können damit aber auch weitere funktionelle Ausbildungen der Reiblamelle einfacher erreicht werden.

So kann beispielsweise gemäß einer Ausführungsvariante dazu vorgesehen sein, dass die Reiblamellensegmente in Umfangsrichtung unter Ausbildung jeweils eines kanalartigen Zwischenraums zwischen zwei Reiblamellensegmenten zueinander beabstandet angeordnet sind. Es ist damit möglich, ohne zusätzliche spanenden Bearbeitung Schmiermittelnuten auszubilden, mit denen die Reiblamelle insbesondere während der Ausbildung des Reibschlusses mit einer weiteren Reiblamelle der Reibvorrichtung besser gekühlt werden kann.

Zur weiteren Verbesserung der Kühlwirkung kann dabei nach einer anderen Ausführungsvariante der Reiblamelle vorgesehen sein, dass die kanalartigen Zwischenräume an zumindest einer Seite in axialer Richtung zumindest teilweise von einem weiteren Reiblamellenring abgedeckt sind. Es können damit zumindest einseitig geschlossene Kühlkanäle einfach ausgebildet werden, wobei das Schmiermittel unmittelbar mit den im Reibschluss stehenden ersten und/oder zweiten Reiblamellenringen in Kontakt gebracht werden kann.

Zur weiteren Verbesserung der Kühlleistung kann vorgesehen sein, dass die kanalartigen Zwischenräume zumindest teilweise einen von der radialen Richtung abweichenden Verlauf aufweisen. Es kann damit der Weg, den das Schmiermittel beim Durchströmen der Reiblamelle zurücklegt, verlängert werden. Zudem kann über Umlenkungen innerhalb der Reiblamelle auch das Strömungsverhalten an sich des Schmiermittels beeinflusst werden.

Gemäß einer anderen Ausführungsvariante der Reiblamelle kann vorgesehen sein, dass zumindest einzelne der Reiblamellensegmente in Umfangsrichtung unterschiedlich lang ausgebildet sind. Obwohl damit der Kostenvorteil, der durch die Reduktion des Verschnitts realisiert werden kann, nicht optimiert werden kann, hat diese Ausführungsvariante aber den Vorteil, dass der Zusammenhalt der Reiblamellensegmente, falls diese miteinander verbunden werden, verbessert werden kann.

Nach einer anderen Ausführungsvariante der Reiblamelle kann vorgesehen sein, dass die Reiblamellenringe miteinander verklebt sind. Es ist damit eine Verringerung der Geräuschentwicklung erzielbar, da der Kleber geräuschdämpfend wirkt. Zudem kann damit aber auch - wiederum durch die Nachgiebigkeit der Klebeverbindung in axialer und gegebenenfalls radialer Richtung - das Einrückverhalten der Reiblamelle während der Ausbildung des Reibschlusses mit der entsprechenden weiteren Reiblamelle der Reibvorrichtung beeinflusst werden.

Es kann weiter vorgesehen sein, dass zumindest einer der Reiblamellenringe an einer Oberfläche zumindest teilweise eine Oberflächenstrukturierung aufweist. Es kann damit das Reibverhalten der Reiblamelle beeinflusst werden, wenn dieser Oberfläche eine äußere Oberfläche der Reiblamelle ist, die mit einer weiteren Reiblamelle der Reibvorrichtung in Eingriff gebracht werden kann. Es ist damit aber auch möglich, das Ölrückhalteverhalten der Reiblamelle zu verändern.

Gemäß einer Ausführungsvariante dazu kann vorgesehen sein, dass zumindest zwei Reiblamellenringe jeweils eine Oberflächenstrukturierung aufweisen, wobei die beiden Oberflächenstrukturierungen zueinander unterschiedlich sind. Es ist damit möglich, das Reibverhalten der Reiblamelle auf den beiden einander gegenüberliegenden Oberfläche, d.h. den Reibflächen, feiner auf die Erfordernisse der Reibvorrichtung abzustimmen.

Weiter kann vorgesehen werden, dass zumindest einer der Reiblamellenringe zumindest eine Vertiefung, insbesondere zumindest eine Nut, aufweist, um darin ein Schmiermittel zur Kühlung der Reiblamelle zu führen.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einer Reibvorrichtung im Querschnitt;
- Fig. 2: eine gattungsgemäße Reiblamelle in Schrägansicht;
- Fig. 3: einen Ausschnitt aus der Reiblamelle nach Fig. 2 im Querschnitt;
- Fig. 4: einen segmentierten Reiblamellenring in Seitenansicht;
- Fig. 5: verschiedene Segmentformen für einen segmentierten Reiblamellenring;
- Fig. 6: eine Ausführungsvariante einer Reiblamelle mit kanalartigen Ausnehmungen in Schrägansicht;
- Fig. 7: eine andere Ausführungsvariante einer Reiblamelle mit kanalartigen Ausnehmungen in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

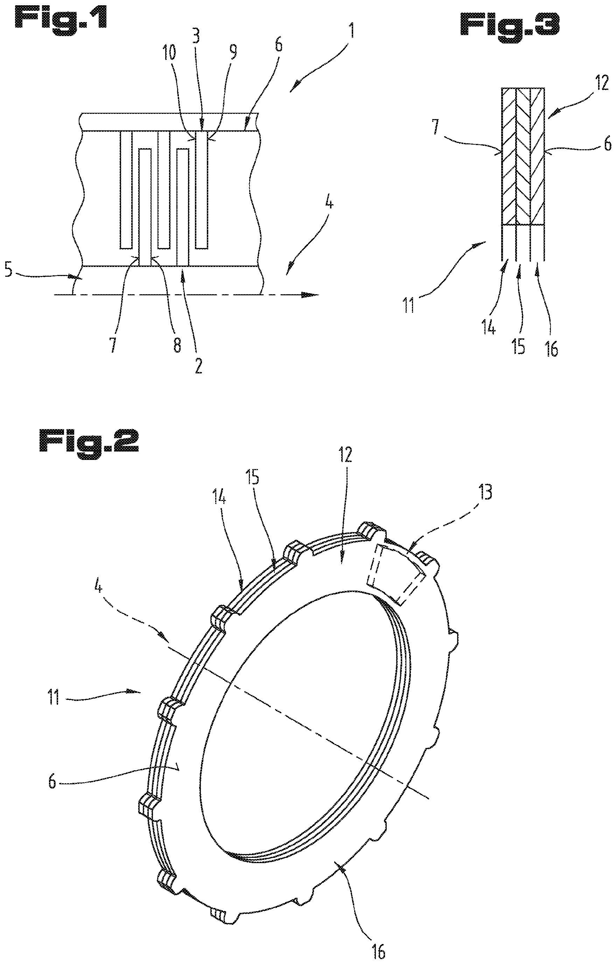

In Fig. 1 ist eine Reibvorrichtung 1 im Ausschnitt gezeigt. Diese weist zumindest eine, vorzugsweise mehrere, Innenlamelle(n) 2 und zumindest eine, vorzugsweise mehrere, Außenlamelle(n) 3 auf. Die Innenlamellen 2 und die Außenlamellen 3 sind in axialer Richtung 4 abwechselnd angeordnet, sodass also in dieser Richtung 4 auf eine Innenlamelle 2 eine Außenlamelle 3, auf diese wieder eine Innenlamelle 2, usw. folgt.

Die Innenlamellen 2 sind normalerweise auf einer Welle 5 angeordnet (befestigt). Die Außenlamellen 3 können beispielsweise innen an einem Gehäuse 6 der Reibvorrichtung 1 angeordnet (befestigt) sein.

Die Innenlamellen 2 weisen einander gegenüberliegende Oberflächen 7, 8 und die Außenlamellen 3 einander gegenüberliegende Oberflächen 9, 10 auf. Die Oberflächen 7 bis 10 sind senkrecht auf die axiale Richtung 4 verlaufend angeordnet. Über diese Oberflächen 7 bis 10 gelangen die Innenlamellen 2 bei Betätigung der Reibvorrichtung 1 mit den Außenlamellen 3 in Kontakt und bilden in weitere Folge einen Reibschluss aus.

Derartige Ausbildungen von Reibvorrichtungen 1 sind prinzipiell aus dem Stand der Technik bekannt, sodass zu weiteren Einzelheiten auf die einschlägige Literatur verwiesen sei.

Die Reibvorrichtung 1 ist also insbesondere eine Kupplung oder eine Bremse.

In den Fig. 2 und 3 ist nun gattungsgemäße Reiblamelle 11 dargestellt.

Die Reiblamelle 11 kann als Innenlamelle 2 oder als Außenlamelle 3 ausgebildet sein, wobei in der Reibvorrichtung 1 sowohl die Innenlamellen 2 als auch die Außenlamellen 3 durch derartige Reiblamellen gebildet sein können.

Die Reiblamelle 11 weist einen Lamellenkörper 12 auf.

Es sei darauf hingewiesen, dass es im Rahmen der Erfindung möglich ist, dass auf dem Lamellenkörper 12, also insbesondere der Oberfläche 6 und/oder 7 des Lamellenkörpers 12, zumindest ein Reibbelag 13, z.B. zumindest ein herkömmliches Sinterreib-Pad, angeordnet bzw. befestigt ist, wie diese in Fig. 2 strichliert angedeutet ist. Die Reiblamelle 11 kann also je nach Ausbildung als Träger für zumindest einen derartigen Reibbelag 13 dienen, oder sie kann auch ohne derartige Reibbeläge 13 eingesetzt werden, wobei in diesem Fall die Reiblamelle 11 vorzugsweise eine so genannte Gegenlamelle für mit Reibbelägen 13 ausgerüstete Lamellen ist. Diese Gegenlamelle bildet insbesondere die Außenlamelle 3 in der Reibvorrichtung 1.

Der Lamellenkörper 12 ist mehrschichtig ausgebildet. In der dargestellten Ausführungsvariante ist der Lamellenkörper 12 dreischichtig ausgebildet mit einem ersten Reiblammelenring 14, einem zweiten Reiblamellenring 15 und einem dritten Reiblamellenring 16. Der zweite Reiblamellenring 15 ist in der axialen Richtung 4 betrachtet zwischen dem ersten Reiblamellenring 14 und dem dritten Reiblamellenring 16 angeordnet.

Es sei darauf hingewiesen, dass im Rahmen der Beschreibung der Begriff "Reiblamellenring" nicht so zu verstehen ist, dass dieser ausschließlich auf kreisringförmig beschränkt ist. Vielmehr kann der Begriff generell vollumfänglich geschlossene ringartige Elemente umfassen, wie sie üblicherweise in Reibeinrichtungen 1 verwendet werden, in denen die Reiblamelle 11 ebenfalls eingesetzt wird.

Obwohl diese dreischichtige Ausführungsvariante der mehrschichtigen Reiblamelle 11 eine bevorzugte Ausführungsvariante ist, sei jedoch darauf hingewiesen, dass im Rahmen der Erfindung die Mehrschichtigkeit der Reiblamelle 1 anders ausgestaltet sein kann.

So kann eine nicht erfindungsgemäße Reiblamelle 11 in der einfachsten Ausführungsvariante aus lediglich zwei gleichen Reiblamellenringen 14 oder aus einem Reiblamellenring 14 und einem Reiblamellenring 15 nur zweischichtig aufgebaut sein.

Ebenso ist es möglich, dass die Reiblamelle 11 mehr als einen Reiblamellenring 14 und/oder mehr als einen Reiblamellenring 15 und/oder mehr als einen Reiblamellenring 16 aufweist. Beispielsweise kann die Reiblamelle jeweils einen Reiblamellenring 14 aufweisen, die die Oberfläche 6 und die Oberfläche 7 der Reiblamelle 11 bilden, und dazwischen mehrere Reiblamellenringe 15.

Generell kann die Reiblamelle 11 in Summe zwischen zwei und zwanzig, insbesondere zwischen zwei und zehn, Reiblamellenringe 14 bis 16 aufweisen, kann also beispielsweise maximal zwanzigschichtig ausgebildet sein. Weiter kann die Reiblamelle generell nur eine Art an Reiblamellenringen 14 bis 16 oder eine Mischung aus zumindest zwei verschiedenen Reiblamellenringen 14 bis 16 aufweisen.

In der bevorzugten Ausführungsvariante der Reiblamelle 11 ist diese symmetrisch ausgebildet. Mit symmetrisch ist dabei gemeint, dass die beiden äußersten Reiblamellenringe 14 und 16 gleich sind bzw. die gleichen Eigenschaften aufweisen, und dazwischen Reiblamellenringe 15 angeordnet sind, die zu den Reiblamellenringen 14 und 16 unterschiedlich sind bzw. andere Eigenschaften als diese aufweisen. Es besteht dabei auch die Möglichkeit, dass mehr als ein Reiblamellenring 14 und/oder 16 außen angeordnet ist, zwischen denen ein oder mehrere Reiblamellenringe 15 angeordnet sind.

Weiter besteht die Möglichkeit, dass die Reiblamelle 11 als Sandwichverbund ausgebildet ist. Damit ist gemeint, dass die Reiblamelle 11 in der axialen Richtung 4 aus einer Abfolge von Reiblamellenringen 14 und 15 besteht, wobei auf einen oder mehreren Reiblamellenringen 14 ein oder mehrere Reiblamellenringe 15, darauf wieder ein oder mehrere Reiblamellenringe 14, usw. folgen.

Für den Fall, dass mehr als zwei unterschiedliche Reiblamellenringe 14 bis 16 für die Reiblamelle 11 verwendet werden, beispielsweise drei oder vier oder fünf, kann die Abfolge dieser Reiblamellenringe 14 bis 16 entsprechend symmetrisch aufgebaut werden.

Es besteht aber im Rahmen der Erfindung aber auch die Möglichkeit, dass die Reiblamelle 11 asymmetrisch aufgebaut ist, dass also die Oberfläche 6 durch einen Reiblamellenring 16 gebildet ist, der unterschiedlich ist zu einem Reiblamellenring 14, der die Oberfläche 7 der Reiblamelle bildet.

Es sind im Rahmen der Erfindung auch noch andere Kombinationen von Reiblamellenringen 14 bis 16 möglich, die aber nicht alle hier erwähnt werden können. Diese kann der Fachmann aber ohne weiteres aufgrund der gegenständlichen Lehre auffinden.

Wie schon voranstehend angedeutet, besteht mit der Reiblamelle 11 aufgrund der Mehrschichtigkeit die Möglichkeit, dieser ein entsprechendes Eigenschaftsprofil zu verleihen. Zu diesem Zweck können die Werkstoffe für die Reiblamellenringe 14 bis 16 entsprechend gewählt werden.

So können die Reiblamellenringe 14 bis 16 aus einem Werkstoff hergestellt sein, der ausgewählt werden kann aus einer Gruppe umfassend oder bestehend aus metallische Werkstoffe, wie insbesondere Stahl, Aluminium und dessen Legierungen, Kupfer und dessen Legierungen, einem Metallschaum, insbesondere aus den genannten Metallen, nichtmetallische Werkstoffe, wie insbesondere Kohlenstoff. Die äußeren Reiblamellenringe 14 und 16, die während des Reibschlusses zur Anlage mit einer weiteren Reiblamelle gelangen, sind allerdings nicht aus einem harzgetränkten Papier bzw. generell einem harzgetränkten Faserwerkstoff gebildet. Die zwischen diesen äußeren Reiblamellenringen 14 und 16 angeordneten Reiblamellenringe 14 und/oder 15 und/oder 16 können jedoch bei Bedarf einem harzgetränkten Papier bzw. generell einem harzgetränkten Faserwerkstoff gebildet sein, wodurch eine weitere Möglichkeit zur Einstellung der Elastizität oder der Dämpfung der Reiblamelle 11 erreicht werden kann.

Bevorzugt ist jedoch, dass sämtliche Reiblamellenringe 14 bis 16 aus einem Werkstoff hergestellt sind, der ausgewählt werden kann aus der Gruppe umfassend oder bestehend aus metallische Werkstoffe, wie insbesondere Stahl, Aluminium und dessen Legierungen, Kupfer und dessen Legierungen, einem Metallschaum, insbesondere aus den genannten Metallen, nichtmetallische Werkstoffe, wie insbesondere Kohlenstoff.

Innerhalb des abgesteckten Umfanges der eingesetzten Werkstoffe besteht weiter die Möglichkeit, dass Werkstoffkombinationen für die Reiblamellenringe 14 bis 16 verwendet werden, deren Werkstoffe zwar zur selben Gruppe gehören, sich diese Werkstoffe allerdings in den (mechanischen) Eigenschaften unterscheiden. So ist es beispielsweise möglich, dass die Reiblamelle 11 zwar zur Gänze aus Reiblamellenringen 14 bis 16 aus Stahl hergestellt sind, allerdings die Reiblamellenringe 14 bis 16 aus unterschiedlichen Stahlsorten hergestellt sind. Beispielsweise kann damit der Reiblamelle 11 im "Kern" eine höhere Zähigkeit (verglichen mit dem Stahl der Reiblamellen 14 und 16) durch Auswahl einer entsprechenden Stahlsorte für den zumindest einen Reiblamellenring 15 verliehen werden, wohingegen die äußeren Reiblamellenringe 14 und 16 aus einer Stahlsorte mit einer höheren Härte (verglichen mit dem Stahl des zumindest einen Reiblamellenringes 15) bestehen.

Beispielsweise können die äußeren Reiblamellenringe 14 und 16 eine Härte aufweisen, die ausgewählt ist aus einem Bereich von 100 HV10 bis 1000 HV10. Der zumindest eine innere Reiblamellenring 15 kann eine Härte aufweisen, die ausgewählt ist aus einem Bereich von 170 HV10 bis 600 HV10.

Daneben kann die Reiblamelle 11 aber auch aus Reiblamellenringen 14 bis 16 aufgebaut werden, die aus verschiedenen Metallen bestehen. Beispielsweise können die äußeren Reiblamellenringe 14 und 16 aus einem Stahl bestehen und der zumindest eine innere Reiblamellenring 15 aus Aluminium oder Kupfer oder deren Legierungen.

Die Materialauswahl richtet sich dabei nach den gewünschten mechanischen Eigenschaften, die der Reiblamelle 11 verliehen werden sollen.

Es ist weiter alternativ oder zusätzlich dazu möglich, dass die Reiblamelle 11 aus Reiblamellenringen 14 bis 16 aufgebaut wird, die eine unterschiedliche Schichtstärke (in der axialen Richtung 4 betrachtet) aufweisen. Insbesondere können die beiden äußeren Reiblamellenringe 14 und 16 dünner ausgeführt sein, als der zumindest eine innere Reiblamellenring 15.

Es sei in diesem Zusammenhang noch einmal darauf hingewiesen, dass mit "die beiden äußeren Reiblamellenringe 14 und 16" nicht zwingend gemeint ist, wenngleich dies bevorzugt ist, dass jeweils nur ein äußerer Reiblamellenring 14 und 16 vorhanden ist, sondern können in der axialen Richtung 4 auch zwei oder mehr Reiblamellenringe 14 und/oder 16 jeweils nebeneinander angeordnet sein.

Die Schichtstärke der äußeren Reiblamellenringe 14 und 16 kann beispielsweise zwischen 0,1 mm und 25 mm, insbesondere zwischen 0,5 mm und 10 mm, betragen. Die Schichtstärke des zumindest einen inneren Reiblamellenringes 15 kann zwischen 0,5 mm und 30 mm, insbesondere zwischen 1 mm und 20 mm, betragen.

Die einzelnen Reiblamellenringe 14 bis 16 der Reiblamelle 11 sind miteinander verbunden. Die Verbindung kann beispielsweise über stoffschlüssige Techniken erfolgen, wie beispielsweise eine Klebeverbindung, eine Schweißverbindung, eine Lötverbindung, etc.,. Es sind aber auch rein kraftschlüssige bzw. rein mechanische Verbindungen alternativ oder zusätzlich dazu möglich, wie beispielsweise Nieten oder Schrauben.

In den folgenden Figuren sind weitere und gegebenenfalls für sich eigenständige Ausführungsformen der Reiblamelle 11 gezeigt, wobei wiederum für gleiche Teile gleiche Bezugszeichen bzw. Bauteilbezeichnungen wie in den vorangegangenen Fig. 2 und 3 verwendet werden. Um unnötige Wiederholungen zu vermeiden, wird auf die detaillierte Beschreibung zu den vorangegangenen Fig. 2 und 3 hingewiesen bzw. Bezug genommen.

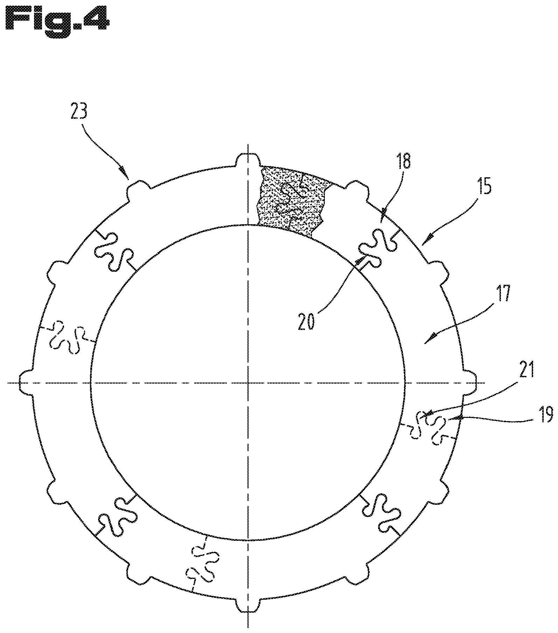

Fig. 4 zeigt den zweiten Reiblamellenring 15. Dieser ist aus mehreren Reiblamellensegmenten 17 zusammengesetzt. Die einzelnen Reiblamellensegmente 17 sind vorzugsweise formschlüssig miteinander zur Ausbildung des geschlossenen Reiblamellenrings 15 verbunden. Dazu können die einzelnen Reiblamellensegmente 17 stirnseitig entsprechende Formschlusselemente 18, 19 aufweisen. Dabei ist jeweils das Formschlusselement 18 komplementär zum Formschlusselement 19 ausgebildet, sodass das Formschlusselement 18, das einen in Umfangsrichtung des Reiblamellenringes 15 vorragenden Formschlusselementteil 20 aufweist, in eine entsprechend geformte Einformung, die das Formschlusselement 19 bildet, ohne Ausbildung eines Zwischenraums eingreift. Zusätzlich zu dieser rein geometrisch bedingten Verbindung können die Verbindungsstellen der Reiblamellensegmente 17 miteinander verstemmt werden.

Alternativ oder zusätzlich zur formschlüssigen Verbindung der Reiblamellensegmente 17 können diese auch stoffschlüssig miteinander verbunden werden, beispielsweise miteinander verschweißt oder verlötet werden.

Der zweite Reiblamellenring 15 kann aus einer Anzahl an Reiblamellensegmenten 17 bestehen, die ausgewählt ist aus einem Bereich von zwei bis fünfzehn, insbesondere aus einem Bereich von drei bis sieben.

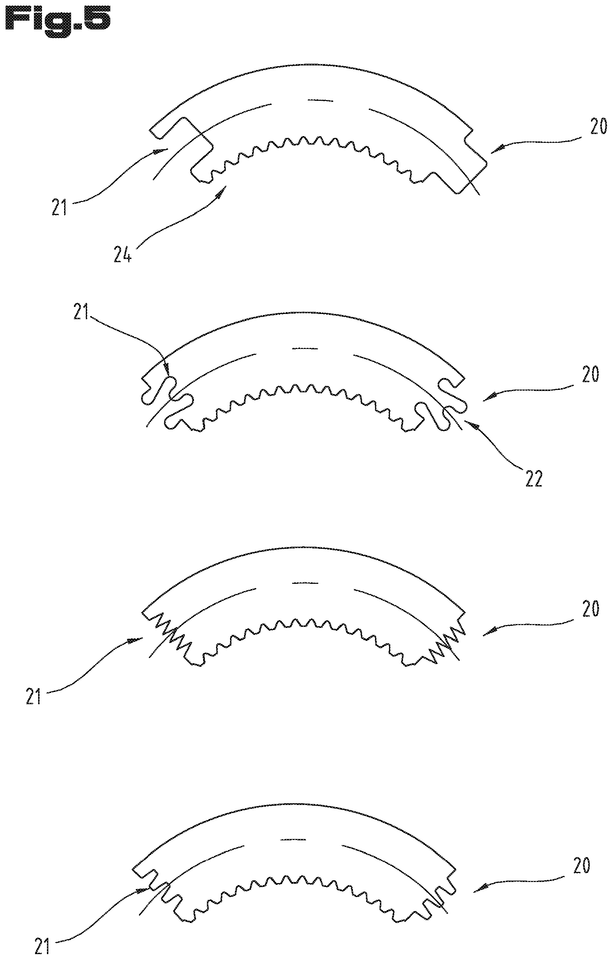

Die Formschlusselemente 18, 19 können den Anforderungen entsprechend ausgebildet sein. Es ist dazu in Fig. 5 eine nicht limitierend zu sehende Auswahl an Möglichkeiten der Form der Formschlusselemente 18, 19 dargestellt.

So kann das Formschlusselement 18 beispielsweise als einfache, zumindest annähernd rechteckförmige oder quadratische Zunge, die den Formschlusselementteil 20 bildet, ausgebildet sein. Das dazu komplementäre Formschlusselement 19 ist demensprechend als Einformung 21 ausgebildet, die ebenfalls einen zumindest annähernd rechteckförmigen oder quadratischen Querschnitt aufweist, wie dies aus Fig. 5 ersichtlich ist.

Es ist aber möglich, dass der Formschlusselementteil 20 in Art einer Verzahnung ausgebildet ist, die sich zumindest teilweise über die jeweilige Stirnseite des Reiblamellensegmentes 17 erstreckt. Diese Verzahnung kann beispielsweise zumindest annähend dreieckförmige Zähne, die gegebenenfalls gerundet sind, oder zumindest annähernd trapezförmige Zähne, die gegebenenfalls gerundet sind, aufweisen. Die Einformungen 21 sind mit einem entsprechenden Querschnittsverlauf ausgebildet sein.

Neben diesen relativ einfachen geometrischen Ausbildungen der Formschlusselemente 18, 19 können diese aber auch eine komplexere Geometrie aufweisen. Dazu kann z.B. die Zunge des Formschlusselementes 20 zusätzlich zumindest eine weitere, insbesondere gerundete, Einformung 22 aufweisen. Ebenso kann die Zunge hinterschnitten ausgeführt sein. Auch in diesem Fall ist das komplementäre Formschlusselement 19 geometrisch entsprechend ausgebildet.

Es sei noch einmal darauf hingewiesen, dass die in Fig. 5 dargestellten Ausführungsformen der Formschlusselemente 18, 19 lediglich beispielhaften Charakter haben.

Es ist weiter möglich, dass zumindest einzelne der Reiblamellenringe 14 bis 16 jeweils unterschiedliche Reiblamellensegmente 17 mit gegebenenfalls unterschiedlichen Formschlusselementen 18, 19 aufweisen.

Es ist im Rahmen der Erfindung aber auch möglich, dass der zumindest eine zweite Reiblamellenring 15 zwar aus Reiblamellensegmenten 17 aufgebaut ist, diese jedoch nicht miteinander verbunden sind, also keine Formschlusselemente 18, 19 aufweisen. In diesem Fall können die Reiblamellensegmente 17 mit ihren Stirnseiten in Umfangsrichtung der Reiblamelle 11 aneinander anliegend angeordnet sein, wobei der Zusammenhalt des zumindest einen zweiten Reiblamellenringes 15 durch Verbindung der Reiblamellensegmente 17 mit dem benachbarten Reiblamellenring 14 und/oder 16 hergestellt wird.

Die Reiblamellensegmente 17 können in Umfangsrichtung des Reiblamellenringes 15 alle gleich lang sein.

Es besteht aber auch die Möglichkeit, dass, wie dies in Fig. 4 dargestellt ist, zumindest zwei unterschiedliche Reiblamellensegmente 17 für den Reiblamellenring 15 verwendet werden, wobei diese beiden Reiblamellensegmente 17 in Umfangsrichtung des Reiblamellenringes 15 unterschiedlich lang sind. Beispielsweise kann damit eine Abfolge lang - kurz - lang- kurzetc. von Reiblamellensegmenten 17 aufgebaut werden, um damit die mechanische Festigkeit der Reiblamelle 11 (Fig. 2) zu verbessern.

Die Aneinanderreihung, d.h. die Abfolge, der unterschiedlichen langen Reiblamellensegmente 17 kann dabei symmetrisch erfolgen. Es aber auch möglich, dass diese Aneinanderreihung asymmetrisch ausgebildet ist.

Es ist im Rahmen der Erfindung weiter möglich, dass nicht nur der zumindest eine zweite Reiblamellenring 15 derartige Reiblamellensegmente 17 aufweist bzw. aus diesen gebildet ist. Ebenso kann der erste Reiblamellenring 14 und/oder kann der dritte Reiblamellenring 16 segmentiert ausgeführt sein. Es sind daher die voranstehenden Ausführungen zur Segmentierung des zweiten Reiblamellenringes 15 vollinhaltlich auf den ersten und/oder dritten Reiblamellenringe 14, 16 übertragbar.

Sofern die Reiblamelle 11 nur aus segmentierten Reiblamellenringen 14 bis 16 besteht, ist es von Vorteil, wenn die einzelnen Reiblamellensegmente 17 in Umfangsrichtung der Reiblamelle 11 versetzt sind, sodass sich kein in axialer Richtung durchgehender Verbindungsbereich zwischen den Reiblamellensegmenten 17 ergibt. Mit anderen Worten ausgedrückt, ist es von Vorteil, wenn die Formschlusselemente 18, 19 eines Reiblamellenringes 14 bis 16 von zumindest einem Bereich eines Reiblamellensegmentes 17 eines unmittelbar benachbarten Reiblamellenringes 14 bis 16 abgedeckt ist, der keine Formschlusselemente 18, 19 aufweist.

Die Versetzung der Reiblamellensegmente 17 in Umfangsrichtung - bezogen auf die relative Position der Reiblamellensegmente 17 des unmittelbar benachbarten Reiblamellenringes 14 bis 16 - kann symmetrisch erfolgen. Es ist aber auch möglich, dass diese Verdrehung der Reiblamellensegmente 17 nach dem Zufallsprinzip erfolgt.

Es ist im Rahmen der Erfindung möglich, dass alle Reiblamellenringe 14 bis 16 oder nur einige von allen Reiblamellenringen 14 bis 16 segmentiert sind. Beispielsweise können die äußeren Reiblamellenringe 14 und 16 unsegmentiert, also einstückig, und die inneren Reiblamellenringe 15 segmentiert ausgebildet sein. Ebenso ist eine Abfolge aus segmentierten und nicht segmentierten Reiblamellenringe 14 bis 16 in der axialen Richtung 4 (Fig. 2) möglich, bzw. können auch andere Ausbildungsvarianten ausgebildet werden.

Ergänzend sei darauf hingewiesen, dass aus Fig. 4 ersichtlich ist, dass der zumindest eine zweite Reiblamellenring 15 nach einer ersten erfindungsgemäßen Alternative mehrere über den Umfang verteilt angeordnete Fahnen 23 aufweist, die der verdrehgesicherten Anordnung der Reiblamelle 11 in der Reibvorrichtung 1 dienen. Auch hier zeigt sich der Vorteil der Erfindung, dass nämlich nicht sämtliche der Reiblamellenringe 14 bis 16 derartige Fahnen 23 aufweisen, sondern nur ein zweiter Reiblamellenring 15 oder mehrere der zweiten Reiblamellenringe 15 derartige Fahnen 23 aufweisen.

Aus Fig. 5 ist wiederum ergänzend ersichtlich, dass die Reiblamellensegmente 17, und damit auch der zweite Reiblamellenring 15, nach einer zweiten erfindungsgemäßen Alternative, einen innere Steckverzahnung 24 aufweist, um die Reiblamelle 11 verdrehgesichert auf der Welle 5 (Fig. 1) anordnen zu können. Auch hierbei gilt wiederum dass nicht sämtliche der Reiblamellenringe 14 bis 16 eine derartige Steckverzahnung 24 aufweisen, sondern nur ein zweiter Reiblamellenring 15 oder mehrere der zweiten Reiblamellenringe 15 derartige Steckverzahnungen 24 aufweisen.

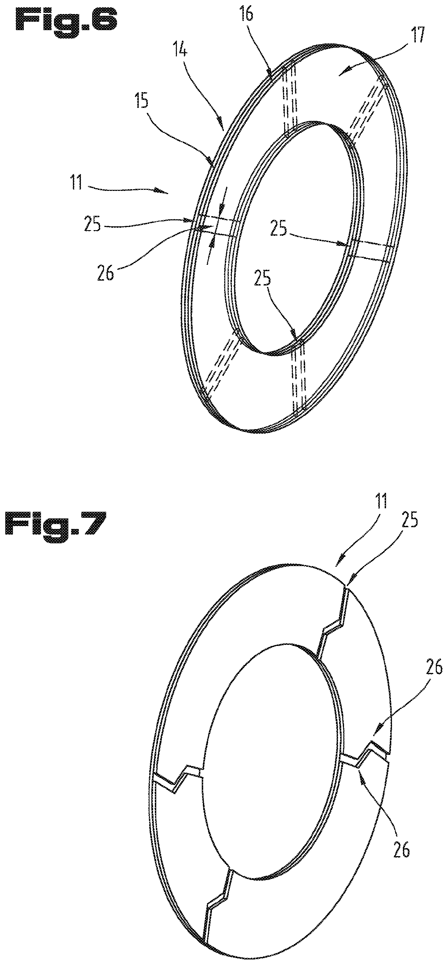

In Fig. 6 ist eine Ausführungsvariante einer dreischichtigen Reiblamelle 11 gezeigt, wobei der innere, zweite Reiblamellenring 15 wiederum segmentiert ist und somit die Reiblamellensegmente 17 aufweist. Zum Unterschied zur voranstehend beschriebenen, segmentierten Reiblamelle 11 sind bei der Ausführungsvariante nach Fig. 6 die Reiblamellensegmente 17 des oder zumindest eines der Reiblamellenringe(s) 15 allerdings nicht aneinander anliegend und nicht miteinander verbunden angeordnet. Vielmehr sind die Reiblamellensegmente 17 in Umfangsrichtung der Reiblamelle 11 unter Ausbildung jeweils eines kanalartigen Zwischenraums 25 zwischen zwei Reiblamellensegmente 17 zueinander beabstandet angeordnet.

Die kanalartigen Zwischenräume 25 werden insbesondere zur Zuführung bzw. Führung eines Schmiermittels zur Kühlung der Reiblamelle 11 verwendet.

Die kanalartigen Zwischenräume 25 können eine Breite 26 in Umfangsrichtung aufweisen, die ausgewählt ist aus einem Bereich von 1 mm bis 30 mm, je nach Größe der Reiblamelle 11.

Weiter können die kanalartigen Zwischenräume 25 aus den Reiblamellensegmenten 17 eines Reiblamellenringes 14 bis 16 oder von mehreren unmittelbar benachbart angeordneten Reiblamellenringen 14 bis 16 gebildet sein. Es ist damit möglich die Tiefe der kanalartigen Zwischenräume 25 in axialer Richtung 4 (Fig. 1) auf einfache Weise anzupassen.

In der dargestellten Ausführungsvariante der Reiblamelle 1 sind die kanalartigen Zwischenräume 25 beidseits von jeweils einem Reiblamellenring 14 bzw. 16 abgedeckt. Es besteht aber auch die Möglichkeit, dass die kanalartigen Zwischenräume 25 zumindest einseitig offen ausgebildet sind, wie dies aus Fig. 7 ersichtlich ist.

In der in Fig. 6 dargestellten Ausführungsvariante der Reiblamelle 11 weisen die kanalartigen Zwischenräume 25 einen radialen Verlauf auf. Es besteht aber auch die Möglichkeit, wie dies aus Fig. 7 ersichtlich ist, die eine weitere Ausführungsvariante der Reiblamelle 11 mit den kanalartigen Zwischenräumen 25 zeigt, dass die kanalartigen Zwischenräume 25 zumindest teilweise einen von der radialen Richtung abweichenden Verlauf aufweisen. So ist es beispielsweise möglich, dass die kanalartigen Zwischenräume 25 eine, zwei oder mehrere Abwinkelungen 26 aufweist, um damit das Schmiermittel (Kühlmittel) länger innerhalb bzw. an der Reiblamelle 11 zu halten und damit eine effizientere Kühlung zu ermöglichen.

Es sind auch andere Verläufe als der in Fig. 7 beispielhaft dargestellte, nicht radiale Verlauf der kanalartigen Zwischenräume 25 herstellbar bzw. ausbildbar.

Es sei darauf hingewiesen, dass bei zwei- oder mehrschichtigen Ausführungen der Reiblamelle 11 eine verbesserte Kühlung der Reiblamelle 11 auch dadurch bewirkt werden kann, dass in zumindest einer der Oberflächen der Reiblamellenringe 14 bis 16 zumindest eine Nut bzw. generell zumindest eine Vertiefung ausgebildet wird. Dieser zumindest eine Vertiefung kann dabei an den äußeren Oberflächen, d.h. den Reibflächen, der Reiblamelle ausgebildet werden. Ebenso ist es alternativ oder zusätzlich möglich, dass zumindest einer der Oberflächen, an den zwei Reiblamellenringe 14 bis 16 aneinander anliegen, mit zumindest einer derartigen Vertiefung versehenen wird. Gegebenenfalls können beide der aneinander anliegenden Oberflächen der Reiblamellenringe 14 bis 16 mit zumindest einer derartigen Vertiefung versehen werden, wobei in diesem Fall diese Vertiefungen deckungsgleich zur Ausbildung einer Vertiefung bzw. Nut mit einem größeren Querschnitt oder in Umfangsrichtung der Reiblamelle 11 versetzt zueinander angeordnet werden können.

Die zumindest eine Vertiefung kann beispielsweise mit einem spanenden Verfahren oder durch Prägen hergestellt werden.

Es ist weiter alternativ oder zusätzlich zu voranstehenden Ausführungsvarianten der Reiblamelle 11 möglich, dass zumindest einer der Reiblamellenringe 14 bis 16 an einer Oberfläche zumindest teilweise eine Oberflächenstrukturierung aufweist, wobei nach einer weiteren Ausführungsvariante vorgesehen werden kann, dass zumindest zwei Reiblamellenringe 14 bis 16 jeweils eine Oberflächenstrukturierung aufweisen, wobei die beiden Oberflächenstrukturierungen zueinander unterschiedlich sind. Wenn die beiden äußeren Oberflächen der Reiblamelle 11 mit einer derartigen Oberflächenstrukturierung versehen werden, kann damit das Reibverhalten während des Reibschlusses und/oder das Ölrückhaltevermögen der Reiblamelle 11 verändert werden. Sofern eine Oberfläche eines Reiblamellenringes 14 bis 16 mit einer derartigen Oberflächenstrukturierung versehen wird, kann die Verbindungsfestigkeit der Reiblamellenringe 14 bis 16 miteinander verbessert werden, indem diese Oberflächenstrukturierung beispielsweise als Formschlusselemente wirken, indem sie beispielsweise in die jeweilige Gegenfläche eingedrückt werden.

Die Oberflächenstrukturierung kann mit bekannten Verfahren erzeugt werden, beispielsweise durch Prägen oder Sandstrahlen, oder durch mechanische Verfahren, wie schleifen oder feilen, oder durch chemische Verfahren, wie Ätzen, etc..

Die Oberflächenstrukturierung kann daher die Form von Riefen und Graten aufweisen, oder in Form von zylinderförmigen oder pyramidenstumpfförmigen Erhebungen, etc., ausgebildet sein. Es sei darauf hingewiesen, dass diese Aufzählung von möglichen Ausgestaltungen der Oberflächenstrukturierung nicht beschränkend zu sehen ist.

Die Reiblamellenringe 14 bis 16 und/oder die Reiblamellensegmente 17 können gegebenenfalls nach unterschiedlichen Verfahren hergestellt sein. Beispielsweise können die Reiblamellenringe 15 gestanzt und die Reiblamellenringe 14 und 16 lasergeschnitten werden. Auch andere schneidende Formgebungsverfahren sind einsetzbar.

Die Ausführungsbeispiele zeigen mögliche Ausführungsvarianten der Reibvorrichtung 1 bzw. der Reiblamelle 11, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus der Reibvorrichtung 1 bzw. der Reiblamelle 11 diese bzw. deren Bestandteile teilweise unmaßstäblich und/oder vergrößert und/oder verkleinert dargestellt wurden.

### Bezugszeichenaufstellung

- 1: Reibvorrichtung
- 2: Innenlamelle
- 3: Außenlamelle
- 4: Richtung
- 5: Welle
- 6: Gehäuse
- 7: Oberfläche
- 8: Oberfläche
- 9: Oberfläche
- 10: Oberfläche
- 11: Reiblamelle
- 12: Lamellenkörper
- 13: Reibbelag
- 14: Reiblamellenring
- 15: Reiblamellenring
- 16: Reiblamellenring
- 17: Reiblamellensegment
- 18: Formschlusselement
- 19: Formschlusselement
- 20: Formschlusselementteil
- 21: Einformung
- 22: Einformung
- 23: Fahne
- 24: Steckverzahnung
- 25: Zwischenraum
- 26: Breite
- 27: Abwinkelung

## Patentansprüche

1. Reiblamelle (11) für eine Reibvorrichtung (1), mit einem Lamellenkörper (12), der einander gegenüberliegende Oberflächen (6, 7) aufweist, wobei auf den Oberflächen (6, 7) zumindest ein Reibbelag (13) oder wobei auf den Oberflächen (6, 7) kein Reibbelag (13) angeordnet ist, wobei der Lamellenkörper (12) in axialer Richtung (4) mehrschichtig mit zumindest einem ersten Reiblammellenring (14), einen oder mehrere zweite Reiblamellenring (15) und zumindest einem dritten Reiblamellenring (16) ausgebildet ist, der zweite Reiblamellenring (15) zwischen dem ersten und dem dritten Reiblamellenring (14, 16) angeordnet ist, und der erste, der zweite und der dritte Reiblamellenring (14 bis 16) miteinander verbundenen sind, und am äußeren Umfang des Lamellenkörpers (12) Fahnen (23) oder am inneren Umfang eine Steckverzahnung (24) zur verdrehgesicherten Anordnung der Reiblamelle (11) in einer Reibvorrichtung (1) aufweist, **dadurch gekennzeichnet, dass** die Fahnen (23) oder die Steckverzahnung (24) nur auf einem oder mehreren der zweiten Reiblamellenringe (15) angeordnet sind.

2. Reiblamelle (11) nach Anspruch 1, **dadurch gekennzeichnet, dass** zumindest zwei der miteinander verbundenen Reiblamellenringe (14 bis 16) aus einem unterschiedlichen Werkstoff bestehen.

3. Reiblamelle (11) nach Anspruch 2, **dadurch gekennzeichnet, dass** ein Reiblamellenring (14 bis 16) aus einem Stahl gebildet ist und ein weiterer Reiblamellenring (14 bis 16) ebenfalls aus einem Stahl gebildet ist, wobei die Stähle unterschiedliche Eigenschaften aufweisen, insbesondere eine unterschiedliche Härte.

4. Reiblamelle (11) nach einem der Ansprüche 1 bis 3, **dadurch gekennzeichnet, dass** der zweite Reiblamellenring (15) unterschiedlich ist zu dem ersten und dem zweiten Reiblamellenring (14, 16).

5. Reiblamelle (11) nach Anspruch 4, **dadurch gekennzeichnet, dass** der zweite Reiblamellenring (15) eine zu dem ersten und dem zweiten Reiblamellenring (14, 16) unterschiedliche Schichtdicke und/oder Härte aufweist.

6. Reiblamelle (11) nach Anspruch 5, **dadurch gekennzeichnet, dass** der erste und dritte Reiblamellenring (14, 16) dünner und härter ausgebildet sind als der zweite Reiblamellenring (15).

7. Reiblamelle (11) nach einem der Ansprüche 1 bis 6, **dadurch gekennzeichnet, dass** zumindest einer der Reiblamellenringe (14 bis 16) aus mehreren Reiblamellensegmenten (17) zusammengesetzt ist, die in einer Umfangsrichtung der Lamellenkörpers (12) hintereinander angeordnet sind, wobei gegebenenfalls zumindest einzelne der mehreren Reiblamellensegmente (17) miteinander verbunden sind.

8. Reiblamelle (11) nach Anspruch 7, **dadurch gekennzeichnet, dass** die Reiblamellensegmente (17) in Umfangsrichtung unter Ausbildung jeweils eines kanalartigen Zwischenraums (25) zwischen zwei Reiblamellensegmenten (17) zueinander beabstandet angeordnet sind.

9. Reiblamelle (11) nach Anspruch 8, **dadurch gekennzeichnet, dass** die kanalartigen Zwischenräume (25) an zumindest einer Seite in axialer Richtung zumindest teilweise von einem weiteren Reiblamellenring (14 bis 16) abgedeckt sind.

10. Reiblamelle (11) nach Anspruch 8 oder 9, **dadurch gekennzeichnet, dass** die kanalartigen Zwischenräume (25) zumindest teilweise einen von der radialen Richtung abweichenden Verlauf aufweisen.

11. Reiblamelle (11) nach einem der Ansprüche 6 bis 10, **dadurch gekennzeichnet, dass** zumindest einzelne der Reiblamellensegmente (17) in Umfangsrichtung unterschiedlich lang ausgebildet sind.

12. Reiblamelle (11) nach einem der Ansprüche 1 bis 11, **dadurch gekennzeichnet, dass** die Reiblamellenringe (15 bis 16) miteinander verklebt sind.

13. Reiblamelle (11) nach einem der Ansprüche 1 bis 12, **dadurch gekennzeichnet, dass** zumindest einer der Reiblamellenringe (14 bis 16) an einer Oberfläche zumindest teilweise eine Oberflächenstrukturierung aufweist.

14. Reiblamelle (11) nach Anspruch 13, **dadurch gekennzeichnet, dass** zumindest zwei Reiblamellenringe (14 bis 16) jeweils eine Oberflächenstrukturierung aufweisen, wobei die beiden Oberflächenstrukturierungen zueinander unterschiedlich sind.

15. Reiblamelle (11) nach einem der Ansprüche 1 bis 3 oder 7 bis 14, **dadurch gekennzeichnet, dass** zumindest einer der Reiblamellenringe (14 bis 16) zumindest eine Vertiefung aufweist.

## Claims

1. A friction disc (11) for a friction device (1), with a disc body (12), which has opposing surfaces (6, 7), wherein at least a friction lining (13) is arranged on the surfaces (6, 7) or wherein no friction lining (13) is arranged on the surfaces (6, 7), wherein the disc body (12) is designed to have multiple layers in the axial direction (4) with at least one first friction disc ring (14), one or multiple second friction disc rings (15), and at least one third friction disc ring (16), the second friction disc ring (15) being arranged between the first and the third friction disc ring (14, 16), and the first, the second and the third friction disc rings (14 to 16) being connected to one another, and has lugs (23) on the outer circumference of the disc body (12) or a spline toothing (24) on the inner circumference for an arrangement, secured against rotation, of the friction disc (11) in a friction device (1), **characterized in that** the lugs (23) or the spline toothing (24) are arranged only on one or multiple of the second friction disc rings (15).

2. The friction disc (11) according to claim 1, **characterized in that** at least two of the connected friction disc rings (14 to 16) are made from different materials.

3. The friction disc (11) according to claim 2, **characterized in that** a friction disc ring (14 to 16) is formed of a steel, and a further friction disc ring (14 to 16) is also formed of a steel, wherein the steels have different properties, in particular different degrees of hardness.

4. The friction disc (11) according to one of claims 1 to 3, **characterized in that** the second friction disc ring (15) is different from the first and the second friction disc ring (14, 16).

5. The friction disc (11) according to claim 4, **characterized in that** the second friction disc ring (15) has a layer thickness and/or hardness that is different from the first and the second friction disc ring (14, 16).

6. The friction disc (11) according to claim 5, **characterized in that** the first and third friction disc rings (14, 16) are formed to be thinner and harder than the second friction disc ring (15).

7. The friction disc (11) according to one of claims 1 to 6, **characterized in that** at least one of the friction disc rings (14 to 16) is assembled from multiple friction disc segments (17), which are arranged one after the other in a circumferential direction of the disc body (12), wherein possibly at least some of the multiple friction disc segments (17) are connected to one another.

8. The friction disc (11) according to claim 7, **characterized in that** the friction disc segments (17) are arranged spaced apart from one another in the circumferential direction, in each case forming a channel-like intermediate space (25) between two friction disc segments (17).

9. The friction disc (11) according to claim 8, **characterized in that** the channel-type intermediate spaces (25) are covered at least partially on at least one side in the axial direction by a further friction disc ring (14 to 16).

10. The friction disc (11) according to claim 8 or 9, **characterized in that** the channel-type intermediate spaces (25) at least partially have an extension deviating from the radial direction.

11. The friction disc (11) according to one of claims 6 to 10, **characterized in that** at least some of the friction disc segments (17) are designed to have different lengths in the circumferential direction.

12. The friction disc (11) according to one of claims 1 to 11, **characterized in that** the friction disc rings (15 to 16) are adhered to one another.

13. The friction disc (11) according to one of claims 1 to 12, **characterized in that** at least one of the two friction disc rings (14 to 16) at least partially has a surface structure on a surface.

14. The friction disc (11) according to claim 13, **characterized in that** at least two friction disc rings (14 to 16) each have a surface structure, wherein the two surface structures are different from one another.

15. The friction disc (11) according to one of claims 1 to 3 or 7 to 14, **characterized in that** at least one of the friction disc rings (14 to 16) has at least one recess.

## Revendications

1. Lamelle à friction (11) pour un dispositif à friction (1), avec un corps de lamelle (12) qui présente des surfaces (6, 7) opposées, dans laquelle, sur les surfaces (6, 7), est disposée au moins une garniture de friction (13) ou dans laquelle, sur les surfaces (6, 7), n'est disposée aucune garniture de friction (13), dans laquelle le corps de lamelle (12) est constitué, dans la direction axiale (4), de plusieurs couches avec au moins un premier anneau de lamelle à friction (14), un ou plusieurs deuxièmes anneaux de lamelle à friction (15) et au moins un troisième anneau de lamelle à friction (16), le deuxième anneau de lamelle à friction (15) est disposé entre le premier et le deuxième anneaux de lamelle à friction (14, 16) et le premier, le deuxième et le troisième anneau de lamelle à friction (14 à 16) sont reliés entre eux et qui comprend, sur la circonférence extérieure du corps de lamelle (12), des drapeaux (23) ou, sur la circonférence intérieure, une denture d'emboîtement (24) pour la disposition sécurisée en rotation de la lamelle à friction (11) dans un dispositif à friction (1), **caractérisée en ce que** les drapeaux (23) ou la denture d'emboîtement (24) sont disposés uniquement sur une ou plusieurs des deuxièmes anneaux de lamelle à friction (15).

2. Lamelle à friction (11) selon la revendication 1, **caractérisée en ce qu'**au moins deux des anneaux de lamelle à friction (14 à 16) reliés entre eux sont constitués d'un matériau différent.

3. Lamelle à friction (11) selon la revendication 2, **caractérisée en ce qu'**un anneau de lamelle à friction (14 à 16) est constitué d'un acier et un autre anneau de lamelle à friction (14 à 16) est également constitué d'un acier, dans laquelle les aciers présentent des propriétés différentes, plus particulièrement des duretés différentes.

4. Lamelle à friction (11) selon l'une des revendications 1 à 3, **caractérisée en ce que** le deuxième anneau de lamelle à friction (15) est différent du premier et du deuxième anneau de lamelle à friction (14, 16).

5. Lamelle à friction (11) selon la revendication 4, **caractérisée en ce que** le deuxième anneau de lamelle à friction (15) présente une épaisseur de couche et/ou une dureté différente du premier et du troisième anneaux de lamelle à friction (14, 16).

6. Lamelle à friction (11) selon la revendication 5, **caractérisée en ce que** le premier et le troisième anneaux de lamelle à friction (14, 16) sont plus minces et plus durs que le deuxième anneau de lamelle à friction (15).

7. Lamelle à friction (11) selon l'une des revendications 1 à 6, **caractérisée en ce qu'**un des anneaux de lamelle à friction (14 à 16) est constitué de plusieurs segments de lamelle à friction (17) qui sont disposés les uns derrière les autres dans une direction circonférentielle du corps de lamelle (12), dans laquelle également au moins certains des plusieurs segments de lamelle à friction (17) sont reliés entre eux.

8. Lamelle à friction (11) selon la revendication 7, **caractérisée en ce que** les segments de lamelle à friction (17) sont disposés de manière distante entre eux dans la direction circonférentielle en formant respectivement un espace intermédiaire (25) en forme de canal entre deux segments de lamelle à friction (17).

9. Lamelle à friction (11) selon la revendication 8, **caractérisée en ce que** les espaces intermédiaires (25) en forme de canaux sont recouverts, au moins sur un côté dans la direction axiale, au moins partiellement par un autre anneau de lamelle à friction (14 à 16).

10. Lamelle à friction (11) selon la revendication 8 ou 9, **caractérisée en ce que** les espaces intermédiaires (25) en forme de canaux présentent au moins partiellement un tracé différent de la direction radiale.

11. Lamelle à friction (11) selon l'une des revendications 6 à 10, **caractérisée en ce qu'**au moins certains des segments de lamelle à friction (17) sont réalisés avec une longueur différente dans la direction circonférentielle.

12. Lamelle à friction (11) selon l'une des revendications 1 à 11, **caractérisée en ce que** les anneaux de lamelle à friction (15 à 16) sont collés entre eux.

13. Lamelle à friction (11) selon l'une des revendications 1 à 12, **caractérisée en ce qu'**au moins un des anneaux de lamelle à friction (14 à 16) comprend, sur une surface, au moins partiellement une texture de surface.

14. Lamelle à friction (11) selon la revendication 13, **caractérisée en ce qu'**au moins deux anneaux de lamelle à friction (14 à 16) présentent chacun une texture de surface, dans laquelle les deux textures de surfaces sont différentes entre elles.

15. Lamelle à friction (11) selon l'une des revendications 1 à 3 ou 7 à 14, **caractérisée en ce qu'**au moins un des anneaux de lamelle à friction (14 à 16) comprend au moins une cavité.
